**Europäisches Patentamt**

**European Patent Office**

**Office européen des brevets**

(19)

(11) Veröffentlichungsnummer: **0 276 769**
**B1**

(12) # EUROPÄISCHE PATENTSCHRIFT

(45) Veröffentlichungstag der Patentschrift:
02.05.90

(21) Anmeldenummer: **88100891.6**

(22) Anmeldetag: **22.01.88**

(51) Int. Cl.⁴: **B60N 2/00**, A47C 7/35

(54) **Sitz für Kraftfahrzeuge.**

(30) Priorität: **27.01.87 DE 3702262**

(43) Veröffentlichungstag der Anmeldung:
**03.08.88 Patentblatt 88/31**

(45) Bekanntmachung des Hinweises auf die Patenterteilung:
**02.05.90 Patentblatt 90/18**

(84) Benannte Vertragsstaaten:
**BE DE ES FR GB IT SE**

(56) Entgegenhaltungen:
**DE-A- 3 223 814**
**DE-A- 3 510 274**
**DE-C- 2 532 974**

(73) Patentinhaber: **BASF Aktiengesellschaft,
Carl-Bosch-Strasse 38, D-6700 Ludwigshafen(DE)**

(72) Erfinder: **Hauck, Christian, Dr., Rilkestrasse 10,
D-6149 Rimbach(DE)**
Erfinder: **Strickle, Erich, Max-von-Seubert-Strasse 62,
D-6800 Mannheim 51(DE)**

**Beschreibung**

Die Erfindung bezieht sich auf einen Sitz für Kraftfahrzeuge entsprechend dem Oberbegriff des Anspruchs 1.

Bei den bekannten Sitzen dieser Art sind, um das Fahren für die Fahrzeuginsassen komfortabler zu gestalten, d.h. um Bewegungen in bezug auf den Fahrzeugrahmen ausgleichen zu können, die Sitzteile mit metallischen Federelementen ausgestattet. Diese sind im allgemeinen zwischen dem Sitzgestell bzw. -rahmen unmittelbar unter dem Schaumstoffpolster angebracht. Ein solcher Sitzaufbau, bei dem die Federn auch als Auflage für das Schaumstoffpolster dienen, hat sich im wesentlichen gut bewährt. Dabei ist jedoch die Härte der Sitze standardisiert. Mit anderen Worten: die Federungshärte der Sitze kann nicht im Sinne einer Anpassung an die individuellen Bedürfnisse des Benutzers verändert werden.

Es sind verschiedene Konstruktionen bekannt, die dazu dienen, den federnden Stützmechanismus für Kraftfahrzeugsitze einstellbar zu machen. Gemäß der DE-C 25 32 974, die dem Oberbegriff des Anspruchs 1 entspricht, wird hierzu das Sitzgestell beidseits über Lenker an einem dem Fahrzeugaufbau zugeordneten Grundrahmen unter Zwischenschaltung zweier Federn abgestützt. Die Federn sind an ihrem einem Ende am Sitzgestell befestigt und greifen mit ihrem anderen Ende an Widerlagern an, die mittels einer Gewindespindelanordnung stufenlos verstellbar sind.

Weiterhin ist aus der DE-C 32 23 814 eine Vorrichtung zur Einstellung des Sitzpolsters eines Sitzes bekannt, wobei unter dem Polsterkissen eine harte Platte vorgesehen ist, die über ein Querelement mit einem Drehantriebsmechanismus verbunden ist. Durch Drehen einer Gewindespindel wird die Platte wippartig nach oben oder unten bewegt, so daß die Höhe sowie in begrenztem Umfang auch die Härte des Vorderteils des Sitzpolsters verändert werden.

Diese Konstruktionen befriedigen jedoch nicht in jeder Hinsicht, sei es, daß eine große Betätigungskraft erforderlich ist, wenn eine Einstellung vorgenommen wird, oder sei es, daß eine Nachregulierung der Sitzhärte nur in engen Grenzen bzw. nur in Teilbereichen des Sitzes möglich ist. Darüber hinaus sind die bekannten Verstelleinrichtungen verhältnismäßig kompliziert und teuer.

Mit der Erfindung soll ein Sitz für Kraftfahrzeuge geschaffen werden, der einfach aufgebaut ist und eine Nachregulierung der Sitzhärte in den praktisch erforderlichen Grenzen nach den individuellen Bedürfnissen des Benutzers ermöglicht.

Zur Lösung dieser Aufgabe werden die im Kennzeichen des Anspruchs 1 angegebenen Maßnahmen vorgeschlagen.

Der Sitz hat ein Sitzteil, das aus einem Gestell und einem innerhalb des Gestells angebrachten, in Form einer Platte ausgebildeten, federnden Auflageelement besteht. Die Befestigung der Platte an den Gestellwänden erfolgt mit Hilfe zweier Rahmenkonstruktionen. Dabei ist die Platte in ihren Randbereichen zwischen den Rahmenkonstruktionen gehalten, derart, daß die Gestellwände die horizontale und die Rahmen die vertikale Abstützung übernehmen. Von den Rahmenkonstruktionen ist die obere fest mit den Gestellwänden verbunden. Die untere Rahmenkonstruktion hat zwei einander gegenüberliegende gestellfeste Rahmenteile, durch die die Platte mit der oberen Rahmenkonstruktion verspannt ist, sowie zwei vertikalbewegliche Rahmenteile, welche bei entsprechender Absenkung eine entsprechende Durchbiegung der Platte infolge der Gewichtsbelastung durch den Sitzbenutzer zulassen. Es wird somit der Federweg der elastischen Platte durch das Absenken der vertikalbeweglichen Rahmenteile vergrößert und umgekehrt bei entsprechender Unterstützung verkleinert. Diese Verstellung kann in weiten Grenzen erfolgen und wirkt sich auf die Sitzhärte der gesamten Sitzfläche aus.

Erfindungsgemäß besteht die federnde Platte aus Kunststoff. Sie kann nach üblichen Verarbeitungsverfahren, beispielsweise nach dem Spritzgießverfahren oder Preßverfahren hergestellt werden. Als Kunststoffe eignen sich sowhl durch Strahlung oder Peroxide härtbare Kunstharze als auch thermoplastisch verarbeitbare Kunststoffe sowie Elastomere.

Als durch Strahlung oder Peroxide härtbare Kunststoffe können alle Kunstharze verwendet werden, die durch freie Radikale vernetzt werden können, wie z.B. ungesättigte Polyesterharze, ungesättigte und gesättigte Acrylharze, modifizierte Epoxyharze, modifizierte Polyurethanharze oder Mischungen dieser Harze. Außerdem können mit Erfolg auch Gemische dieser Harze mit damit mischpolymerisierbaren ungesättigten Monomeren verwendet werden.

Geeignete thermoplastische Kunststoffe sind beispielsweise Olefinpolymerisate, wie Polyethylen oder Polypropylen; Styrolpolymerisate, wie Polystyrol oder Copolymere des Styrols mit bis zu 50 Gew.% Acrylnitril, α-Methyl-styrol, Maleinsäureanhydrid, Methylmethacrylat, sowie kautschuk modifizierte Styrolpolymerisate, vorzugsweise solche, die 2 bis 25 Gew.% eines Butadienkautschuks enthalten; Chlor enthaltende Polymerisate, wie Polyvinylchlorid, Polyvinylidenchlorid oder chlorierte Polyolefine; Polyamide, Polymethylmethacrylat, Polyester aus Terephthalsäure und gesättigten Diolen, Polycarbonat sowie Mischungen dieser Polymerisate.

Diese Kunststoffe können die üblichen Zusatzstoffe, wie Füllstoffe, Pigmente, Farbstoffe, Antistatika, Stabilisatoren, Flammschutzmittel oder Gleitmittel enthalten.

Nach einem weiteren Merkmal der Erfindung können diese Kunststoffe auch faserverstärkt sein. Als Fasermaterialien kommen strang- oder bandförmige Gebilde aus natürlichen und synthetischen organischen Fasern, wie z.B. Aramid-, Polyamid-, Polyester-, Polyacrylnitril-, Polyvinylchlorid-, Polyvinylalkohol-, Baumwoll-, Hanffasern und dergleichen sowie anorganischen Fasern, z.B. Glasfasern, Kohlenstoffasern usw. in Betracht. Unter diesen sind Glasfasern, Kohlenstoffasern, Polyesterfasern und Polyvinylalkoholfasern besonders bevorzugt. Diese Fasern können bei ihrer Verwendung in Form eines Garns, eines Vorgespinstes, in Form von gebundenen Stapelfasern oder in Form eines Gewebes, Gewirkes oder Vlies vorliegen. Für einen besseren Zusammenhalt der Fasern sind diese üblicherweise mit Bindern auf Kunststoffbasis beschichtet. Glasfasern sind mit üblichen Schlichten behandelt, die z.B. einen Haftvermittler auf Silan- oder Chrombasis enthalten. Je nach Faseranteil, der vorzugsweise 15 bis 50 Gew. % betragen kann, hat sich eine Dicke der Platte von 3 bis 6 mm insgesamt als zweckmäßig erwiesen. Eine Platte dieser Beschaffenheit gewährleistet sowohl eine ausreichende mechanische Steifigkeit und Festigkeit als auch eine ausreichende Elastizität.

Die Veränderung der Stutzkraft der Platte, d.h. das Verschieben der beiden vertikalbeweglichen Rahmenteile geschieht durch ein Zahnstangenoder Schneckengetriebe und Verstellhebel, wobei gegebenenfalls die Betätigung des Zahnstangenoder Schneckengetriebes mit Hilfe eines motorischen Antriebes erfolgen kann.

Die Erfindung wird nachfolgend unter Hinweis auf die Zeichnungen anhand eines Ausführungsbeispiels näher erläutert. Es zeigt

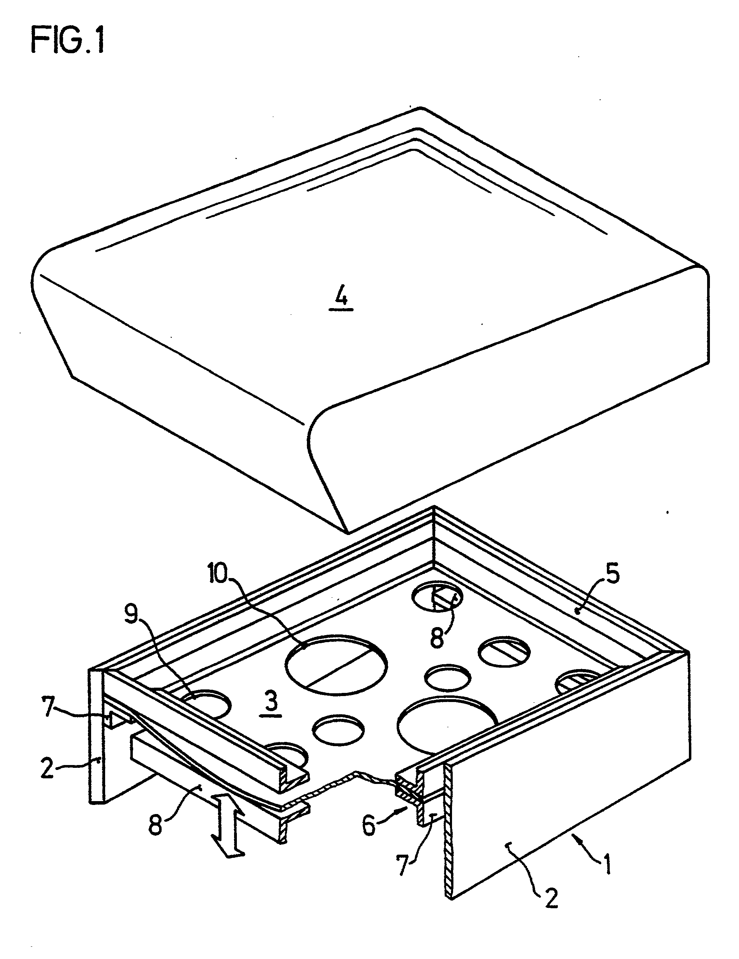

Figur 1 das Sitzteil mit Schaumstoffpolster in perspektivischer Darstellung,

Figur 2 eine Seitenansicht des Sitzteils im Schnitt und

Figur 3 ein Diagramm, in dem der Steifigkeitsbereich "S" einer Platte aus Polyacetal mit den Abmessungen 420 x 480 x 5 mm aufgetragen ist.

Im wesentlichen besteht der Sitz für Kraftfahrzeuge aus einem Sitzteil und einer Rückenlehne. Die Rückenlehne hat keinen Bezug zu der Erfindung und ist in den Zeichnungen nicht dargestellt. Das Sitzteil umfaßt ein Gestell (1), ein zwischen den Gestellwänden (2) sich erstreckendes federndes Auflageelement (3) aus Kunststoff sowie ein üblicherweise von einem Sitzbezug umgebenes Schaumstoffpolster (4). An den inneren Gestellwänden sind zwei Rahmenkonstruktionen (5) und (6) befestigt, welche zwischen sich das als Platte ausgebildete Auflageelement halten. Von den aus Profilstäben, beispielsweise Winkelprofilen, zusammengesetzten Rahmenkonstruktionen ist die obere (5) gänzlich und die unter (6) mit zwei einander gegenüberliegenden Rahmenteilen (7) fest mit dem Gestell verbunden. Die beiden anderen Rahmenteile (8) der unten Rahmenkonstruktion sind vertikalbeweglich. Mit (9) und (10) sind Ausnehmungen in dem Auflageelement bezeichnet, durch die dessen Elastizität beeinflußbar ist.

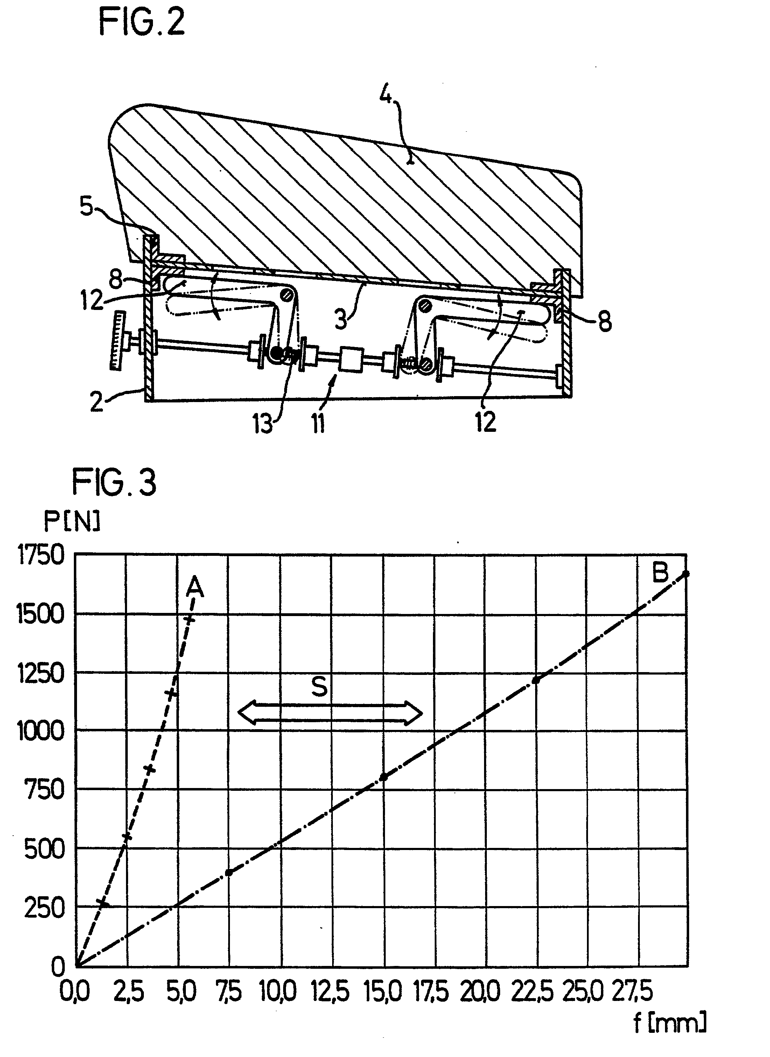

Für die vertikale Bewegung der Rahmenteile (8) ist unterhalb des plattenförmigen Auflageelements (3) ein Drehantriebsmechanismus vorgesehen. Dieser besteht aus einem Zahnstangen- oder Schneckengetriebe (11) sowie aus zwei Verstellhebeln (12), welche einerseits an der Getriebespindel (13) angelenkt sind und andererseits mit den beweglichen Rahmenteilen (8) in Wirkverbindung stehen. In seiner untersten Stellung liegt das Auflageelement (3) nur auf den beiden gestellfesten Rahmenteilen (7) und in der obersten Stellung zusätzlich auf den Rahmenteilen (8) auf (Figur 2). Darzwischen kann jede beliebige Position stufenlos eingestellt werden.

Entsprechend dieser Anordnung besitzt das Auflageelement (3) zwei Grenzsteifigkeiten, die gemäß Figur 3 durch die Kurven A und B verdeutlicht sind. Mit zunehmender Sitzbelastung P steigt die Durchbiegung f des Auflageelements an. Dabei lassen sich die statische Steifigkeit aus dem Quotienten aus Sitzbelastung und Durchbiegung und die dynamische Steifigkeit aus den Tangenten an die Kraft-Weg-Kurven bei unterschiedlicher Sitzbelastung ermitteln. In der einen Grenzstellung d.h., wenn das Auflageelement nur auf den zwei Rahmenteilen (7) aufliegt, ergibt sich die Steifigkeitskurve B. Leigt das Auflageelement dagegen sowohl auf den Rahmenteilen (7) als auch auf den Rahmenteilen (8) auf, so ergibt sich die Steifigkeitskurve A. Die zusätzliche Unterstützung des Auflageelements durch die Rahmenteile (8) vergrößert den Steifigkeitsbereich S merklich.

## Patentansprüche

1. Sitz für Kraftfahrzeuge, mit einem Sitzteil, das von einem Gestell (1), einem zwischen den Gestellwänden (2) sich erstreckenden federnden Auflageelement (3) und einem darauf befindlichen Schaumstoffpolster (4) gebildet ist, dadurch gekennzeichnet, daß das Auflageelement (3) aus einer Platte aus Kunststoff besteht, die Platte in ihren Randbereichen zwischen zwei Rahmenkonstruktionen (5) und (6) gehalten ist, von denen die obere Rahmenkonstruktion (5 und 6) fest mit den Gestellwänden (2) verbunden ist und die untere Rahmenkonstruktion (6) jeweils zwei gegenüberligende gestellfeste Rahmenteile (7) und vertikalbewegbare Rahmenteile (8) aufweist.

2. Sitz für Kraftfahrzeuge nach Anspurch 1, dadurch gekennzeichnet, daß das Auflageelement (3) aus einer Platte aus faserverstärktem Kunststoff besteht.

3. Sitz für Kraftfahrzeuge nach Anspruch 1, dadurch gekennzeichnet, daß die Vertikalbewegung der Rahmenteile (8) mit Hilfe eines Zahnstangenoder Schneckengetriebes (11) und zwei Verstellhebel (12) erfolgt.

4. Sitz für Kraftfahrzeuge nach Anspruch 3, dadurch gekennzeichnet, daß die Betätigung des Zahnstangen- oder Schneckengetriebes (11) mit Hilfe eines motorischen Antriebes erfolgt.

## Claims

1. A seat for motor vehicles, comprising a seat part in the form of a base (1) holding between the base walls (2) a sprung support element (3) supporting a foam cushion (4), wherein said support element (3) comprises a plate of plastic material, said plate is held at its edges between two frame elements (5 and 6), of which the upper frame element (5) is fixed to the base walls (2) and the lower frame element (6) comprises two each of mutually opposite base-fixed frame parts (7) and vertically movable frame parts (8).

2. A seat for motor vehicles as claimed in claim 1, wherein said support element (3) comprises a plate of fiber-reinforced plastic material.

3. A seat for motor vehicles as claimed in claim 1, wherein the vertical movement of the frame parts (8) is effected with the aid of a rack and pinion or worm gear (11) and two adjustment levers (12).

4. A seat for motor vehicles as claimed in claim 3, wherein the rack and pinion or worm gear (11) is actuated with the aid of a motor drive.

## Revendications

1. Siège pour véhicules automobiles comportant une partie assise qui est formée d'un châssis (1), d'un élément support élastique (3) s'étendant entre les parois (2) de ce châssis et d'un coussin en matière alvéolaire (4) placé sur cet élément support, caractérisé par le fait que l'élément support (3) est constitué d'une plaque de plastique et cette plaque est tenue dans la zone de ses bords entre deux cadres (5 et 6), le cadre supérieur (5) étant fixé aux parois (2) du châssis et le cadre inférieur (6) présentant deux parties opposées (7) fixées au châssis et deux parties opposées (8) mobiles verticalement.

2. Siège pour véhicules automobiles selon la revendication 1, caractérisé par le fait que l'élément support (3) est constitué d'une plaque en plastique renforcé par des fibres.

3. Siège pour véhicules automobiles selon la revendication 1, caractérisé par le fait que le mouvement vertical des parties de cadre (8) s'effectue à l'aide d'un mécanisme à crémaillère ou à vis sans fin (11) et de deux leviers de manœuvre (12).

4. Siège pour véhicules automobiles selon la revendication 3, caractérisé par le fait que l'actionnement du mécanisme à crémaillère ou à vis sans fin (11) s'effectue à l'aide d'un dispositif d'entraînement à moteur.

# FIG.1

# FIG.2

# FIG.3